# EUROPÄISCHE PATENTSCHRIFT

(11) **EP 1 232 991 B1**
(45) Veröffentlichungstag und Bekanntmachung des Hinweises auf die Patenterteilung: **15.04.2009**
(21) Anmeldenummer: 02090056.9
(22) Anmeldetag: 13.02.2002
(51) Int. Cl.: B66C 1/12, B66C 1/34, B66C 1/14

(54) **Bauteil für Lastaufnahmeeinrichtungen**
Structural part for load pick-up devices
Elément constitutif pour dispositifs de prise de charge

(30) Priorität: 15.02.2001 DE 10108866
(43) Veröffentlichungstag der Anmeldung: 21.08.2002
(73) Patentinhaber: RuD Ketten Rieger & Dietz GmbH u. Co. KG, 73432 Aalen (DE)
(72) Erfinder: Smetz, Reinhard, 86720 Baldingen (DE)
(74) Vertreter: Grünecker, Kinkeldey, Stockmair & Schwanhäusser Anwaltssozietät

(56) Entgegenhaltungen:
- DE-A1- 2 304 145
- DE-C1- 4 408 562
- US-A- 2 706 509
- US-A- 4 641 877
- US-A- 4 702 508
- US-A- 5 069 331
- US-A- 5 601 326

## Beschreibung

Die Erfindung betrifft ein Bauteil für Lastaufnahmeeinrichtungen im Hebezeugbetrieb gemäß den Begriffsbestimmungen des § 2 der Unfallverhütungsvorschrift VBG 9a der deutschen Berufsgenossenschaften. Bei einem derartigen Bauteil kann es sich u.a. um einen Bügel, einen Haken, eine Öse, einen Schäkel, einen Tragbolzen, ein Rundstahlglied, eine Ringschraube oder eine Traverse handeln. Alle in Betracht kommenden Bauteile unterliegen dem Verschleiß und müssen daher regelmäßigen Prüfungen hinsichtlich ihrer Ablegereife unterzogen werden. Zur Prüfung werden überwiegend Messwerkzeuge, aber auch an die Form des jeweiligen Bauteiles angepasste Prüfschablonen verwendet, deren Prüfmaße Kriterien für die verschleißbedingte Ablegereife des jeweiligen Bauteiles darstellen. Es versteht sich, dass vor allem Bauteilgruppen, die beispielsweise aus einer Aufhängeöse mit einem zum Anschluss an einem Ende eines Kettenstrangabschnittes dienenden, in einem Gabelkopf gelagerten Verbindungsbolzen, aus einem am anderen Ende des Kettenstrangabschnittes angreifenden Anschlaghaken, aus einem in die Hakenzinke eingeschweißten Zwischenglied und aus der Öse eines Anschlusspunktes bestehen, weder mit einem einzigen Messvorgang noch mit einer einzigen Prüfschablone überprüfbar sind, sondern dass es zur Prüfung einer derartigen Bauteilgruppe mehrerer Messvorgänge bzw. Prüfschablonen bedarf. Berücksichtigt man, dass die Bauteile einschlägiger Lastaufnahmeeinrichtungen in den Betrieben zudem in aller Regel in mehreren, nach Tragfähigkeiten gestuften Größen- und/oder Güteklassen vorgehalten werden, so erhält man eine Vorstellung von der Zahl und Vielfalt der erforderlichen Messungen bzw. Prüfschablonen und den Risiken, die mit einer nicht sorgfältigen Aufbewahrung der den Messungen zugrunde zu legenden Ausgangsmaße oder auch der erforderlichen Schablonen verbunden sind. Hinzu kommt, dass im Hebezeugbetrieb mit stark wechselnden Einsatzbedingungen gerechnet werden muss und dass in Fällen unvorhersehbarer kritischer Beanspruchungen die vorgeschriebenen Überwachungsintervalle unter Umständen zu kurz sind, um Schäden durch Überbeanspruchungen zu verhindern.

Der Erfindung liegt die Aufgabe zugrunde, Bauteile der zur Diskussion stehenden Art so auszugestalten, dass sie gewissermaßen mit einer integralen Prüfschablone versehen sind. Erreicht wird dies erfindungsgemäß durch die Merkmale des Anspruchs 1.

Ein Haken bzw. eine Öse mit Markierungen in Form einer Rille oder einer Rippe ist in der DE 44 08 562 C1 offenbart.

Im Sinne der Erfindung ausgestaltete Bauteile machen nicht nur eine mehr oder weniger große Zahl von Messvorgängen unter Zugrundelegung von Formeln und Ausgangsmaßen bzw. von Prüfschablonen überflüssig, sondern sie ermöglichen zudem eine laufende Überwachung durch bloße Sichtkontrolle. Die Ablegereife des jeweiligen Bauteiles lässt sich sicher bestimmen, da Falschmessungen ebenso vermieden werden wie Fehler durch einen unsachgemäßen Einsatz einwandfreier Prüfschablonen bzw. Fehler durch den sachgemäßen Einsatz falscher Prüfschablonen, wobei die vorgenannten Vorteile in besonders starkem Maße bei sogenannten Baukastensystemen mit einer großen Zahl kombinierbarer Bauteile zum Tragen kommen. Da es sich bei einschlägigen Bauteilen in aller Regel um durch Gießen oder Umformen, d.h. vorzugsweise durch Gesenkschmieden oder Walzen hergestellte Bauteile handelt, bereitet die Anbringung der Markierungen allenfalls minimale Kosten, so dass auch insoweit gegenüber der Verwendung von Prüfschablonen ein spürbarer wirtschaftlicher Vorteil erzielt wird, der deshalb besonders zu Buche schlägt, weil Bauteile für Lastaufnahmeeinrichtungen ausgesprochene Massenartikel darstellen.

Weitere Merkmale und Einzelheiten der Erfindung ergeben sich aus den Unteransprüchen und der nachstehenden Beschreibung mehrerer in der beigefügten Zeichnung dargestellter Ausführungsbeispiele der Erfindung. Es zeigen:
- Fig. 1: teilweise im Schnitt die Seitenansicht einer Lastaufnahmeeinrichtung mit einem Kranhaken, einem Aufhängeglied, einem Kettenstrangabschnitt und einem Anschlaghaken, der in das Übergangsglied eines an einer Last befestigten Anschlagpunktes eingehängt ist;
- Fig. 2: teilweise im Schnitt eine Vorderansicht der in Fig. 1 dargestellten Lastaufnahmeeinrichtung;
- Fig. 3: im vergrößerten Maßstab die oberen Bauteile der in Fig. 1 dargestellten Lastaufnahmeeinrichtung;
- Fig. 4: im vergrößerten Maßstab die oberen Bauteile der in Fig. 2 dargestellten Lastaufnahmeeinrichtung;
- Fig. 5: im vergrößerten Maßstab die unteren Bauteile der in Fig. 1 dargestellten Lastaufnahmeeinrichtung;
- Fig. 6: im vergrößerten Maßstab die unteren Bauteile der in Fig. 2 dargestellten Lastaufnahmeeinrichtung;
- Fig. 7: die Seitenansicht eines als Schäkel ausgebildeten Bauteiles;
- Fig. 8: einen Schnitt längs der Linie VIII-VIII durch das Joch des Schäkels gemäß Fig. 7;
- Fig. 9: einen Schnitt längs der Linie IX-IX durch einen der Schenkel des Schäkels gemäß Fig. 7;
- Fig. 10: einen Schnitt längs der Linie X-X durch den Bolzen des Schäkels gemäß Fig. 7;
- Fig. 11: die Seitenansicht einer Ringschraube, in der links noppenförmige und rechts muldenförmige Markierungen gezeigt sind und
- Fig. 12: den unterschiedlichen Markierungen entsprechende Teilschnitte durch das Joch der Ringschraube gemäß Fig. 11.

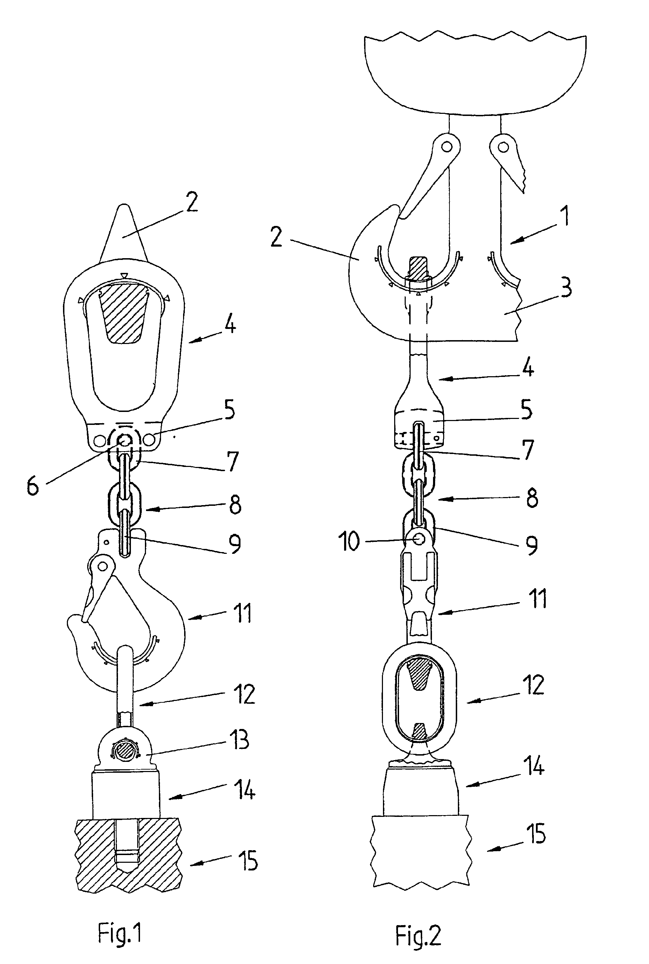

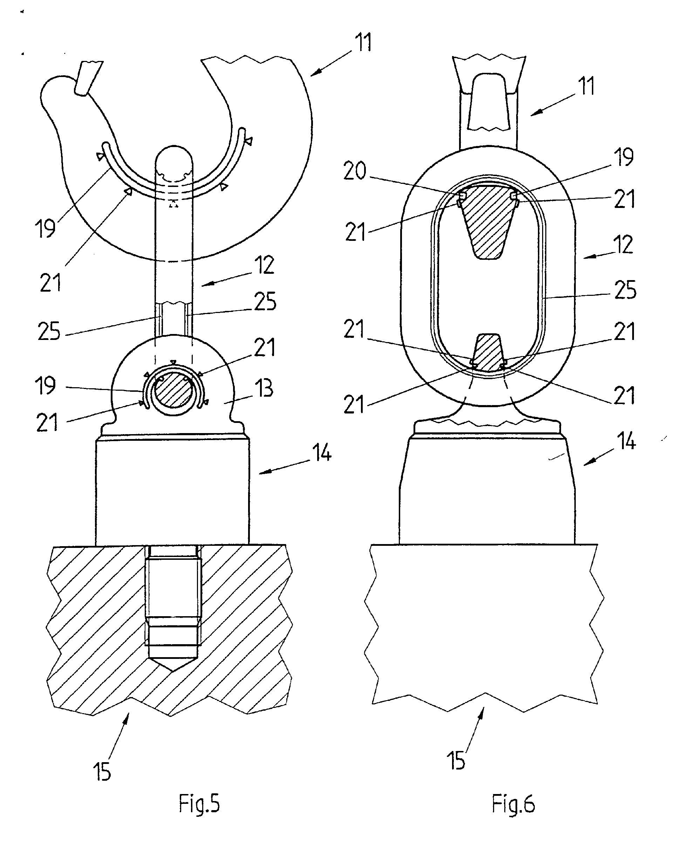

In den Figuren 1 bis 6 ist 1 ein Kranhaken mit zwei Zinken 2 und 3, in dessen linke Zinke 2 ein Aufhängeglied 4 eingehängt ist, das einen Gabelkopf 5 aufweist, mit dessen Bolzen 6 das eine Endglied 7 eines in der Zeichnung aus Gründen der Darstellung nur kurzen Kettenstrangabschnittes 8 verbunden ist. An das andere Endglied 9 des Kettenstrangabschnittes 8 ist wiederum mittels eines Bolzens 10 ein Anschlaghaken 11 angeschlossen, der in ein Übergangsglied 12 eingehakt ist. Das Übergangsglied 12 ist in die drehbare Öse 13 eines Anschlagpunktes 14 eingeschweißt, der an einer Last 15, wie z.B. dem Bett einer Werkzeugmaschine, befestigt ist.

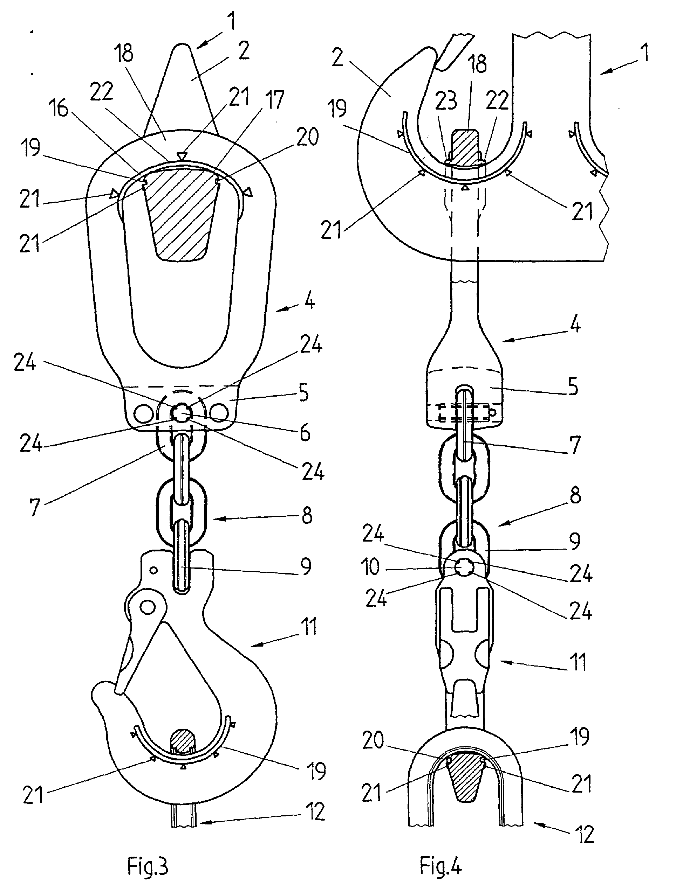

Alle vorgenannten Bauteile sind mit Markierungen versehen, deren Veränderung und/oder Verschwinden dem Benutzer der Lastaufnahmeeinrichtung die Möglichkeit bietet, die Ablegereife der einzelnen Bauteile zu erkennen. So weist der Kranhaken 1 im Bereich der Flanken seiner Zinke 2, d.h. im Abstand von den Kontaktflächen 16, 17 zwischen der Zinke 2 und dem Joch 18 des Aufhängegliedes 4, wie am besten aus Fig. 3 erkennbar ist, von schmalen Rillen gebildete Markierungen 19, 20 auf, denen auf den dem Hakenmaul abgewandten Rillenrand weisende dreieckförmige Zusatzmarkierungen 21 zugeordnet sind. Der Kranhaken 1 ist dann ablegereif, wenn der Verschleiß soweit fortgeschritten ist, dass mindestens eine der Markierungen 19 bzw. 20 an mindestens einer Stelle nicht mehr als Rille wahrnehmbar ist, wobei diese Stelle regelmäßig im Bereich des unteren Scheitelpunktes der Innenkontur der Hakenzinke 2 liegt.

Während der Kranhaken 1 mit von Rillen gebildeten Markierungen 19, 20 ausgestattet ist, weist das Aufhängeglied 4 im Bereich seines Joches 18 von schmalen Rippen gebildete Markierungen 22, 23 auf, denen auch hier dreieckförmige Zusatzmarkierungen 21 zugeordnet sind. Die Unterbrechung auch nur einer Rippe zeigt die Ablegereife des Aufhängegliedes 4 an.

Der das Endglied 7 haltende Bolzen 6 verfügt über vier Markierungen 24, die von gleichmäßig über seinen Umfang verteilten schmalen Längsrillen gebildet werden. Entsprechendes gilt für den Bolzen 10, der das Endglied 8 mit dem Anschlaghaken 11 verbindet, der seinerseits in gleicher Weise wie der Kranhaken 1 mit von schmalen, bogenförmigen Rillen gebildeten Markierungen 19, 20 und Zusatzmarkierungen 21 ausgestattet ist.

Aus zwei schmalen umlaufenden Rillen bestehen die Markierungen 25 des Übergangsgliedes 12, das in die drehbar gelagerte Öse 13 des Anschlagpunktes 14 eingeschweißt ist. Die Öse 13 ist im Bereich der Ränder ihrer das Übergangsglied 12 abstützenden, auf Verschleiß beanspruchten Kontaktfläche wiederum in ähnlicher Weise wie die Zinken des Kranhakens 1 und des Anschlaghakens 11 mit von schmalen Rillen gebildeten Markierungen 19, 20 versehen, denen auch hier Zusatzmarkierungen 21 zugeordnet sind.

Die Glieder des Kettenstrangabschnittes 8 können in gleicher Weise wie das Übergangsglied 12 mit von randseitigen Rillen oder auch nur einer zentralen inneren Rille gebildeten Markierung versehen werden. In der Praxis empfiehlt es sich, einen einheitlichen Markierungstyp zu verwenden, d.h. im vorliegenden Fall die von Rippen gebildeten Markierungen 22, 23 durch von Rillen gebildete Markierungen 19, 20 zu ersetzen.

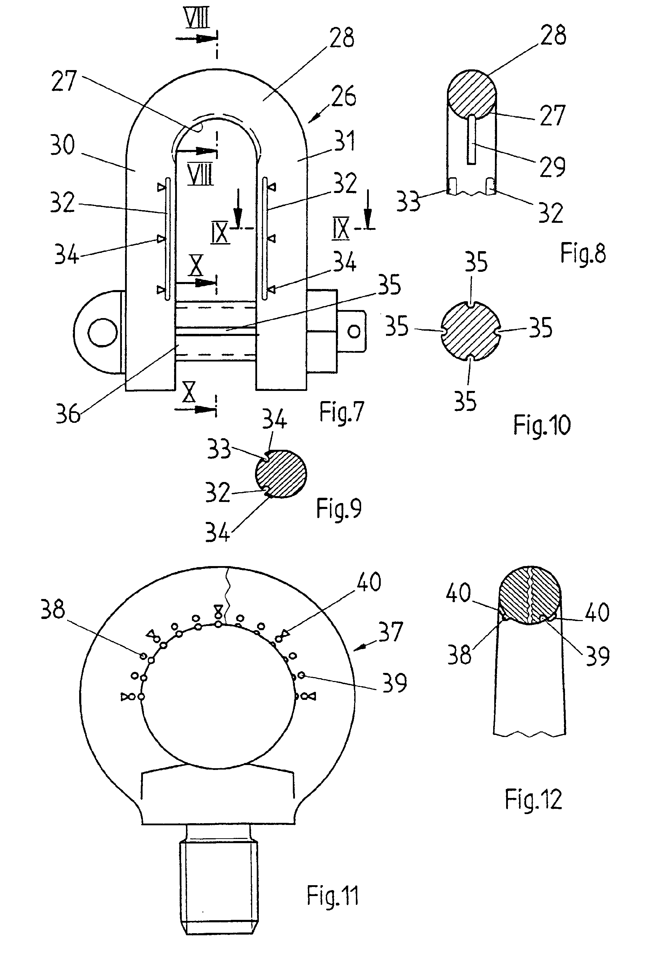

Die Figuren 7 bis 10 zeigen die Ausgestaltung eines als Schäkel 26 ausgebildeten Bauteiles im erfindungsgemäßen Sinne, wobei auch hier von schmalen Rillen 32, 33 gebildete Markierungen zur Anwendung gelangen. An der die am stärksten beanspruchte Kontaktfläche 27 bildenden Innenseite des Joches 28 ist eine einzelne zentralen Markierung 29 angeordnet, während die Flanken der Schenkel 30, 31 an ihren einander zugewandten Rändern mit paarweise angeordneten erfindungsgemäßen Markierungen 32, 33 und Zusatzmarkierungen 34 versehen sind. Vier gleichmäßig über den Umfang verteilte schmale Längsrillen formen Markierungen 35 des Haltebolzens 36.

In den Figuren 11 und 12 ist anhand einer Ringschraube 37 gezeigt, dass auch die Anwendung noppenartiger Markierungen 38 oder muldenförmiger Markierungen 39 möglich ist, denen auch hier wiederum Zusatzmarkierungen 40 zugeordnet sind, die dem Benutzer des Bauteiles anzeigen, wieweit der Verschleißfortschritt maximal gehen darf. Bei sämtlichen Markierungen handelt es sich um vor einer Wärmebehandlung der jeweiligen Bauteile hergestellte Markierungen, d.h. um Markierungen, die im Zuge von Gieß-, Schmiede- oder Walzprozessen erzeugt wurden.

## Patentansprüche

1. Bauteil für Lastaufnahmeeinrichtungen mit Markierungen zur Überwachung seines Verschleißzustandes, **dadurch gekennzeichnet, dass** die Markierungen (19, 20) von länglichen Rillen, Rippen oder Noppenreihen gebildet werden, die außerhalb der durch Reibungsverschleiß beanspruchten Kontaktfläche bzw. Kontaktflächen in deren Nähe angeordnet sind, und dass die Unterbrechung der Rillen, Rippen oder Noppenreihen infolge verschleißbedingten Materialabtrages als Anzeige für die Ablegereife des Bauteiles (1; 4; 11; 37) nutzbar ist.

2. Bauteil nach Anspruch 1, **dadurch gekennzeichnet, dass** jeder Kontaktfläche mindestens zwei Markierungen zugeordnet sind.

3. Bauteil nach Anspruch 1 oder 2, **dadurch gekennzeichnet, dass** die Markierungen (19, 20; 24; 25; 29; 32, 33; 35) von Rillen gebildet werden, die in der Nähe der Ränder der jeweiligen Kontaktfläche angeordnet sind.

4. Bauteil nach Anspruch 1 oder 2, **dadurch gekennzeichnet, dass** die Markierungen (22, 23) von Rippen gebildet werden, die in der Nähe der Ränder der jeweiligen Kontaktfläche angeordnet sind.

5. Bauteil nach Anspruch 1 oder 2, **dadurch gekennzeichnet, dass** die Markierungen (38) von Noppen gebildet werden, die in der Nähe der Ränder der jeweiligen Kontaktfläche angeordnet sind.

6. Bauteil nach Anspruch 1 oder 2, **dadurch gekennzeichnet, dass** die Markierungen (39) von Mulden gebildet werden, die in der Nähe der Ränder der jeweiligen Kontaktfläche angeordnet sind.

7. Bauteil nach Anspruch 1 oder 2, **dadurch gekennzeichnet, dass** die Markierungen (29) im Bereich der Kontaktfläche (27) angeordnet sind.

8. Bauteil nach einem der Ansprüche 1 bis 7, **dadurch gekennzeichnet, dass** es mit dem vom Verschleißfortschritt zuletzt erreichten Rand der Markierungen (19, 20; 32, 33) zugeordneten Zusatzmarkierungen (21; 34) versehen ist.

9. Bauteil nach Anspruch 8, **dadurch gekennzeichnet, dass** die Zusatzmarkierungen (21; 34) die Form eines Dreiecks haben, dessen Spitze dem Rand der Markierungen (19, 20; 32, 33) zugewandt ist.

10. Lastaufnahmeeinrichtung mit Bauteilen nach einem der Ansprüche 1 bis 9 und mindestens einem von einer Kette gebildeten Haltestrang, **dadurch gekennzeichnet, dass** sämtliche Glieder der Kette mit Markierungen in Form von Rillen, Rippen, Noppen od. dgl. versehen sind, deren Erreichen oder zumindest partielles Verschwinden infolge verschleißbedingten Materialabtrages eine Anzeige für die Ablegereife der Kette darstellt.

11. Baukasten zum Zusammenstellen von Lastaufnahmeeinrichtungen aus Bauteilen nach einem der Ansprüche 1 bis 9, **dadurch gekennzeichnet, dass** sämtliche Bauteile gleichartige Markierungen in dem Sinne aufweisen, dass entweder ihr Erreichen oder ihr zumindest partielles Verschwinden infolge fortschreitenden Verschleißes der jeweiligen Kontaktflächen die Ablegereife anzeigt.

## Claims

1. Structural part for load suspension devices having markers for monitoring its state of wear, **characterised in that** the markers (19, 20) are formed by elongated grooves, ribs or rows of knobs which are arranged outside and in the vicinity of the contact surface or contact surfaces stressed by frictional wear and that a break in the grooves, ribs or rows of knobs as a consequence of removal of material caused by wear is usable as an indication for a replacement state of wear of the structural part (1; 4; 11; 37).

2. Structural part according to claim 1, **characterised in that** at least two markers are associated with each contact surface.

3. Structural part according to claim 1 or 2, **characterised in that** the markers (19, 20; 24; 25; 29; 32, 33; 35) are formed by grooves arranged in the vicinity of the edges of the respective contact surface.

4. Structural part according to claim 1 or 2, **characterised in that** the markers (22, 23) are formed by ribs arranged in the vicinity of the edges of the respective contact surface.

5. Structural part according to claim 1 or 2, **characterised in that** the markers (38) are formed by knobs arranged in the vicinity of the edges of the respective contact surface.

6. Structural part according to claim 1 or 2, **characterised in that** the markers (39) are formed by troughs arranged in the vicinity of the edges of the respective contact surface.

7. Structural part according to claim 1 or 2, **characterised in that** the markers (29) are arranged in the region of the contact surface (27).

8. Structural part according to any of claims 1 to 7, **characterised in that** it is provided with additional markers (21; 34) associated with the edge of the markers (19, 20; 32, 33) last reached by the advance of the wear.

9. Structural part according to claim 8, **characterised in that** the additional markers (21; 34) have the shape of a triangle whose apex is facing towards the edge of the markers (19, 20; 32, 33).

10. Load suspension device having structural parts according to any of claims 1 to 9 and at least one retaining strand formed by a chain, **characterised in that** all the links in the chain are provided with markers in the form of grooves, ribs, knobs or the like which when reached or whose at least partial disappearance as a consequence of removal of material caused by wear is an indication for a replacement state of wear of the chain.

11. Construction kit for assembling load suspension devices from structural parts according to any of claims 1 to 9, **characterised in that** all the structural parts have similar markers in the sense that when they are reached or when they at least partially disappear as a consequence of advancing wear of the respective contact surfaces this indicates the replacement state of wear.

## Revendications

1. Elément constitutif pour dispositifs de prise de charge comprenant des marquages destinés à surveiller son état d'usure, **caractérisé en ce que** les marquages (19, 20) sont formés par des rainures, des nervures ou rangées de picots oblongues qui sont disposées à l'extérieur de la surface de contact et/ou des surfaces de contact sollicitées par l'usure par frottement à proximité de celles-ci, et **en ce que** l'interruption des rainures, nervures ou rangées de picots peut être utilisée par suite d'un enlèvement de matériau provoqué par l'usure comme indication de l'état d'usure nécessitant le remplacement de l'élément constitutif (1 ; 4 ; 11 ; 37).

2. Elément constitutif selon la revendication 1,
**caractérisé en ce qu'**au moins deux marquages sont associés à chaque surface de contact.

3. Elément constitutif selon la revendication 1 ou 2, **caractérisé en ce que** les marquages (19, 20 ; 24 ; 25 ; 29 ; 32 ; 33 ; 35) sont formés par des rainures qui sont disposées à proximité des bords de la surface de contact respective.

4. Elément constitutif selon la revendication 1 ou 2, **caractérisé en ce que** les marquages (22, 23) sont formés par des nervures qui sont disposées à proximité des bords de la surface de contact respective.

5. Elément constitutif selon la revendication 1 ou 2, **caractérisé en ce que** les marquages (38) sont formés par des picots qui sont disposés à proximité des bords de la surface de contact respective.

6. Elément constitutif selon la revendication 1 ou 2, **caractérisé en ce que** les marquages (39) sont formés par des creux qui sont disposés à proximité des bords de la surface de contact respective.

7. Elément constitutif selon la revendication 1 ou 2, **caractérisé en ce que** les marquages (29) sont disposés dans la zone de la surface de contact (27).

8. Elément constitutif selon l'une quelconque des revendications 1 à 7, **caractérisé en ce qu'**il est pourvu de marquages additionnels (21 ; 34) associés au bord des marquages (19, 20 ; 32 ; 33) atteint en dernier par la progression de l'usure.

9. Elément constitutif selon la revendication 8, **caractérisé en ce que** les marquages additionnels (21 ; 34) présentent la forme d'un triangle dont la pointe est tournée vers le bord des marquages (19, 20 ; 32, 33).

10. Dispositif de prise de charge comprenant les éléments constitutifs selon l'une quelconque des revendications 1 à 9 et au moins une corde de retenue formée par une chaîne, **caractérisé en ce que** tous les maillons de la chaîne sont pourvus de marquages sous forme de rainures, de nervures, de picots ou similaires, dont l'atteinte ou au moins la disparition partielle par suite d'un enlèvement de matériaux causé par l'usure indique l'état d'usure nécessitant le remplacement de la chaîne.

11. Boîte de construction destinée à combiner des dispositifs de prise de charge à partir d'éléments constitutifs selon l'une quelconque des revendications 1 à 9, **caractérisée en ce que** tous les éléments constitutifs présentent le même type de marquage au sens que soit leur atteinte soit leur disparition au moins partielle par suite d'une usure progressive des surfaces de contact respectives indique leur état d'usure nécessitant le remplacement.
